(19) **Europäisches Patentamt**

**European Patent Office**

**Office européen des brevets**

(11) Publication number: **0 255 049 B1**

(12) **EUROPEAN PATENT SPECIFICATION**

(45) Date of publication of patent specification: **10.07.91**　(51) Int. Cl.⁵: **B01D 15/08**

(21) Application number: **87110684.5**

(22) Date of filing: **23.07.87**

(54) **High density filler type filtration equipment.**

(30) Priority: **25.07.86 JP 175263/86**

(43) Date of publication of application:
**03.02.88 Bulletin 88/05**

(45) Publication of the grant of the patent:
**10.07.91 Bulletin 91/28**

(84) Designated Contracting States:
**DE FR SE**

(56) References cited:
**DD-A- 208 553**
**FR-A- 2 219 797**
**US-A- 4 582 608**

(73) Proprietor: **TOSOH CORPORATION**
**4560, Kaisei-cho**
**Shinnanyo-shi Yamaguchi-ken(JP)**

(72) Inventor: **Sakamoto, Kiyoaki**
**3013-13, Aza Nakanishi Oaza Mure**
**Hofu-shi Yamaguchi-ken(JP)**
Inventor: **Nakahara, Yasuhiro**
**2373-1, Oaza Shimotabuse Tabuse-cho**
**Kumage-gun Yamaguchi-ken(JP)**

(74) Representative: **Vossius & Partner**
**Siebertstrasse 4 P.O. Box 86 07 67**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates generally to filtration device capable of high density filling of the fillers for liquid chromatograph, and more particularly to high density filler type filtration device for analyzing specific materials in the liquid or separating and recovering thereof.

A column for liquid chromatograph is generally known as one of filtration devices of comparatively small scales of quantity. The device will be described by referring to the conventional liquid chromatograph. The device is used for separating or isolating specific materials in the liquid by the difference of permeating speeds when the liquid is passed through the fluid paths installed on the cover of a cylindrical casing, wherein the fillers are filled and both ends of which are sealed.

As for the fillers used for the column, it is common to use inorganic powders (such as silica), resin powders (such as polystyrene resin, acrylate resin) usually in fine grains under several hundreds $\mu$m, or organic resin powders (such as polystyrene resin, acrylate resin) in slurry conditions to fill in the column.

Furthermore, it is functionally necessary for the column to pass the process liquid but to prevent the fillers within the column from flowing out. Filter cloths for preventing water or multi-hole filter plates are installed inside of both ends of the cover of the column as partition membranes. Generally, synthetic resin membranes and filter cloths are used as partition membranes for applying low pressure for the liquid to pass, and solid partition membranes of the multi-hole plate such as stainless sintered plates are used for applying high pressure.

Recently, the demands have been increasing for operating the refinement and recovery of the prescribed materials by using the aforementioned column on an industrial scale. In this case, merely expanding the scales of equipment used in the testing room or laboratory will cause various problems to arise from the points of view of workability specially in safety and operation for assembling the device or replacing parts.

For example, large sized device requires large diameter covers to be inserted to open ends of the cylindrical casing of the column. Accordingly, the weight of the covers increase and in some cases it amounts to several tens of kilograms to several thousands of kilograms. Therefore, machines such as a hoist is required to set the cover in an ordinary work. In that case, simplification of the work which uses such a machine for setting is strongly needed practically. Therefore, the structure of the column should be made in conformity with this need.

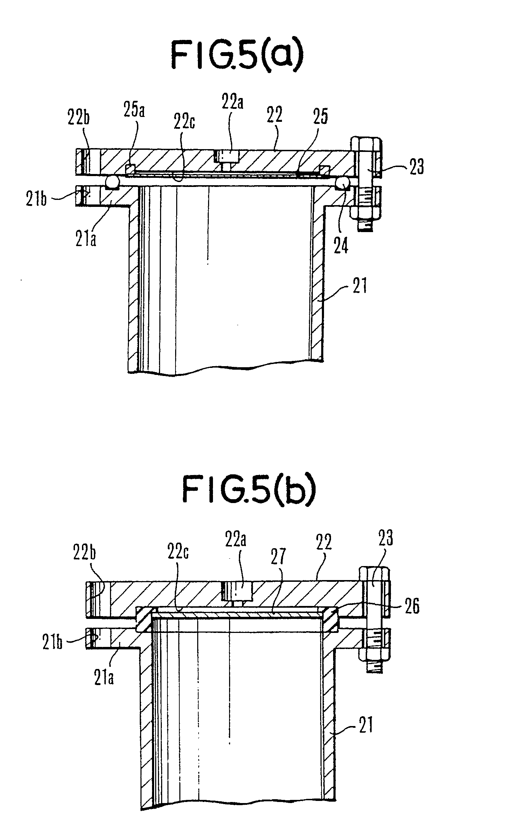

For example, Fig.5 (a) and Fig. 5(b) are shown as examples of a structure of the device used at the test room and the laboratory. Concerning the cover 22 which is attached to the end flange 21a of the column body 21 by clamping bolts 23 extending through bolt holes 226, 216, the former is an example of the structure, to which the cloth partition membrane 25 is pre-installed and the latter is an example of the structure, to which the solid partition membrane of the multi-hole plate 27 is also pre-installed, wherein in both cases the membrane 25 and the plate 27 terminate the inner recess 22c of the cover 22. In the former example, when a filter cloth or the like is installed to the cover 22, the shaping ring 25a as an auxiliary elastic member for press-fitting is to be suitably fixed in the inner circumferential groove of the cover 22 and the cover 22 is sealed by the O-ring 24. Even in that case, higher tension of the filter cloth is required to prevent the cloth from dead weight falling. Thus, shortcomings such as deformations of the shape and size of the filter cloth aperture are observed. In the latter example, on the other hand, the seal ring 26 such as PTFE (polytetrafluoroethylene, and the like) is used for installing the multi-hole plate 27 as a solid partition membrane in the cover 22. Coefficient of friction is small in PTFE. Extremely high precision in the dimentional accuracy is required for the solid partition membrane 27 of the multi-hole plate having large diameter of more than 200 mm for friction endurance. Besides, temperature change is taken into consideration for elasticity, the exact installation is difficult practically. Moreover, when easiness for replacing the parts is taken into consideration, such structures mentioned above are impractical for use. Furthermore, various methods such as calking, fitting with screws, fitting with pins may be applied for fixing the aforementioned partition membrane to the cover. But these methods may cause the incapability of replacing the partition plate, the occurrence of partial standing fluids and corrosion. Accordingly, these methods are not suitable for a fluid process type column.

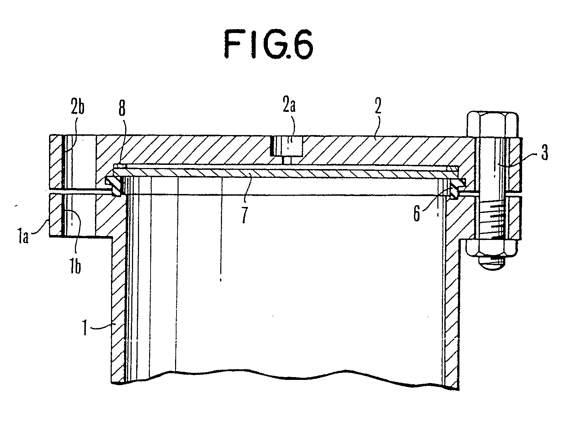

From the viewpoints mentioned above, the present inventors developed filtration device (Column), in which structure the partition membrane and the seal ring are installed in the cover. Fig. 6 shows a column provided with such a structure. The device shown in Fig. 6 is supplied as having the following structure: an outer circumferential flange 1a installed to detachably connect a cover 2 around the upper end of the column, which has a cylindrical body 1 to fill the filler inside thereof, and the cover 2 which has a fluid path 2a and is lockably attached to the upper open end of the column body 1 to seal the cover 2 when the aforementioned fillers are filled; and a seal ring 6 which is prearranged to a flange which is extruding

2

downward from the circumference of the cover 2 and is insertedly set to the sealing position of press fitting on the outer circumferential flange of the column body 1 when the aforementioned lockable attachment is made. The structure is preattached to the cover and is made to prevent the filler within the column body from flowing out by press-fitting the cover.

The objective of improving the work for assembling a column for liquid chromatograph is attainable by the structure mentioned above, however, the column is used for separating the prescribed materials and predetermined capability about the separation ought to be maintained. For example, to realize high density filling of the filler is required for the purpose.

When the filler is filled into the column in the structure of a column for liquid chromatograph, a common technique is that powders as the filler are mixed with the liquid to make slurry, which is poured into the column, and the liquid is extracted therefrom to attain high density, uniform filling of the filler within the column. Such a filling operation cannot be easily realized even with the improved filtration device. This is due to the reason that the slurry is overflowed from the upper end of the column body when the cover is attached to the column body.

Summary of the Invention:

The object of this invention, which is made on the above-mentioned viewpoint, is to provide high density filler type filtration device, which is structured to successfully realize extremely high density and uniform filling of the column fillers as well as to easily assemble and replace the parts when the separation, refinement and recovery of the prescribed materials are performed on an industrial scale. The high density filler type filtration device which is made to realize the above-mentioned object is installed with the outer circumferential flange which detachably connects the cover around the upper end and is equipped with the cylindrical column body to fill the filler inside, the cover which has a fluid path and is lockably attached to the upper open end of the column body to seal the open end of the column body when the aforementioned fillers are filled, a seal ring which is prearranged to a flange which is extruding downward from the circumference of the cover and is insertedly set to the sealing position of press-fitting on the outer circumferential flange of the column body when the aforementioned lockable attachment is made, and a partition membrane which will be set at the position to prevent the filler within the column body from flowing out by lockably attaching the cover as well as by prearranging thereto. In the column body mentioned above, a guide face for slidably guiding the seal ring, wherein the inner circumferential face of the seal ring slides in sealed conditions, is formed in a predetermined length in the direction of the generating line from the outer circumferential flange to the upper end. The aforementioned seal ring slides downward along the guide face to the sealing position after lockably liquid sealing the upper end of the guide face.

This invention can be favourably applied to the column with its diameter of more than 50 mm generally, but more favourably more than 100 mm and further more than 200 mm. But this does not mean that this invention is not applicable to the columns with less diameter described above.

The column which is composed under this invention will be applied to various compositions and objects according to the kinds of fillers, process water as an object, and the materials to be taken out.

For example, fillers for liquid chromatograph, activated carbon, silica gel, ion exchange resin and the like may be mentioned as the fillers to be used.

Moreover, applicable fields for the column which is composed of by this invention are, for example, refinement and recovery of the materials such as protein, enzyme, vitamin and sugar, refinement and recovery of drugs (for example, insulin and the like) and effluent disposal and the like.

Filling the fillers can be performed in the same way as a known one. As a main body of the device which is used in the device of this invention, the column body may be made of metal, synthetic resin (acrylic, vinyl chloride, etc.) for fairly low strength type, inorganic compound (glass, ceramics, etc.) or carbon steel, the inner side of the column being coated with PTFE etc. One end open type or both ends open type of the column may be used. A cylindrical column of stainless steel is adopted generally in consideration of corrosion resistance, chemical resistance, machining, and strength of the structure and the like. A cover which is used to insert in or seal the open end of the column body is made preferably of the same material that is used for the column body. On the cover, the fluid path through which the process fluid passes is piercedly formed usually in one point at the neighborhood of the center, or in a plurality of points at the center, or its surroundings included. A seal ring of PEFE, polyethylene, hard rubber, and the like is attached beforehand to the cover. The seal ring is inserted in the inner circumferential groove by elasticity of the ring itself. The seal ring is used for ensuring the seal by press-fitting with the column body. At the same time, the ring may be served as a stopper ring to prevent the falling down of the partition membrane. It may be effective for decreasing the number of parts, simplifying the assembly work in this case.

An example of the partition membrane which is used in this invention will be given. Soft membranes such as cloth or sheet which passes the fluid may be used for low pressure, for example. But in this case, supporting members such as net or plate should be inserted between the soft membrane and the dented bottom of the cover. Action as rectification means to rectify the flow of the process fluid may be given to the supporting members such as net and the like.

Multi-hole sintered body of the metal powder and the like having enough mechanical strength itself can be used for partition membranes of high pressure. Generally, stainless sintered plates are mostly used.

In the device of this invention, when the cover is attached to the column body, the guide face of the column body which is formed for the seal ring to lockably slide in liquid sealed conditions is provided to have a prescribed length in the direction of the generating line. The length may be designed in an adequate length according to the kind of the filler, degree of the filling, the conditions of the filling (conditions of slurry), but generally in most cases, it is approximately several mm - 30 mm, preferably 5 mm - 20 mm. When the length is below several milimeters, practical merits for high density uniform filling cannot be obtained under this invention.

Furthermore, this invention is provided as a suitable structure for filling the filler into the column in high density but this does not mean the column of the structure in this invention cannot be used for low density filling and the like. The column for fluid chromatography for which this invention is applied, may be used for either analyzing or separating due to the objective classification. It may be used also for gel filtration chromatography or ion exchange chromatography or affinity chromatography or water chromatography.

Brief Description of the Drawings:

Fig. 1 is a longitudinal sectional view showing an example of the structural summary of high density, uniform filler type filtration device according to this invention.

Fig. 2(a) is an assembly procedure for the column body device. Fig. 2(b) is shown as the conditions before and after the cover is attached to the device.

Fig. 3 is a development of the parts of the cover.

Fig. 4 is a longitudinal sectional view of the filtration device showing another embodiment of this invention.

Fig. 5(a) and Fig. 5(b) are views for explaining the attached conditions of the conventional type cover.

Fig. 6 is a longitudinal sectional view of the filtration equipment for explaining the comparative example of this invention.

Detailed Description of the Preferred Embodiments:

The preferred embodiments of this invention will be described referring to the drawings.

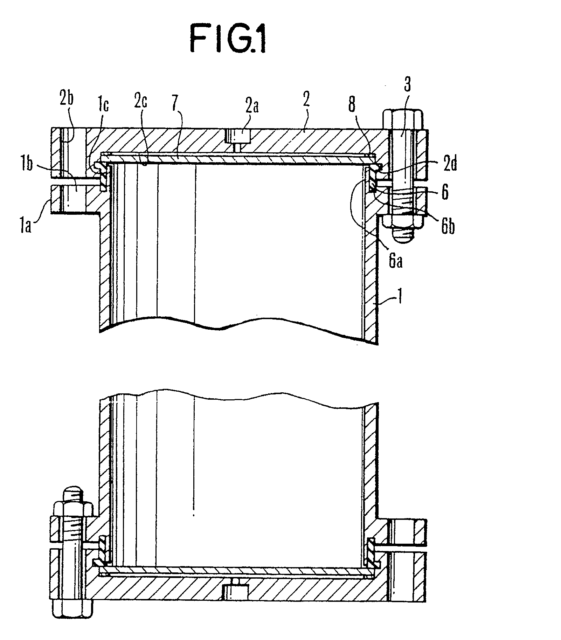

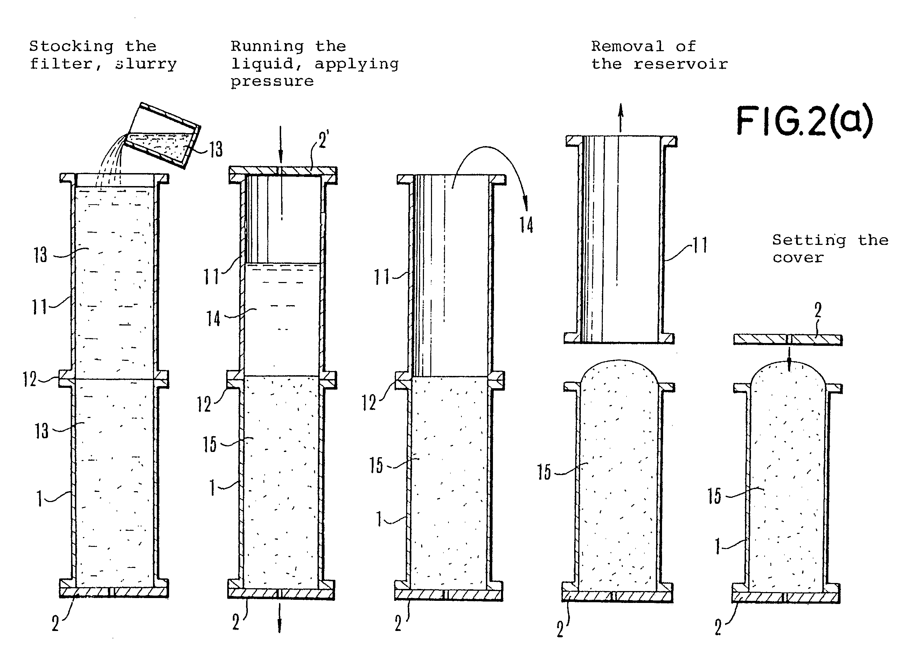

In Fig. 1, 1 is a column body, the shape of which is formed into a cylinder with its both ends opened in this embodiment. Near the upper and lower end, an end flange 1a protruded on the outer circumference is formed. 1b is a bolt hole formed on the end flange 1a.

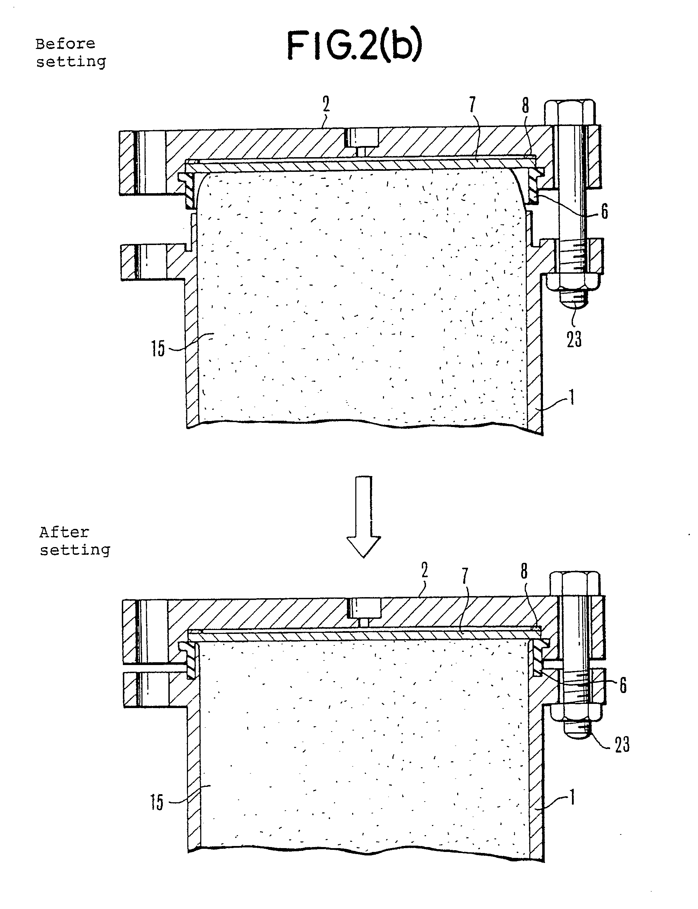

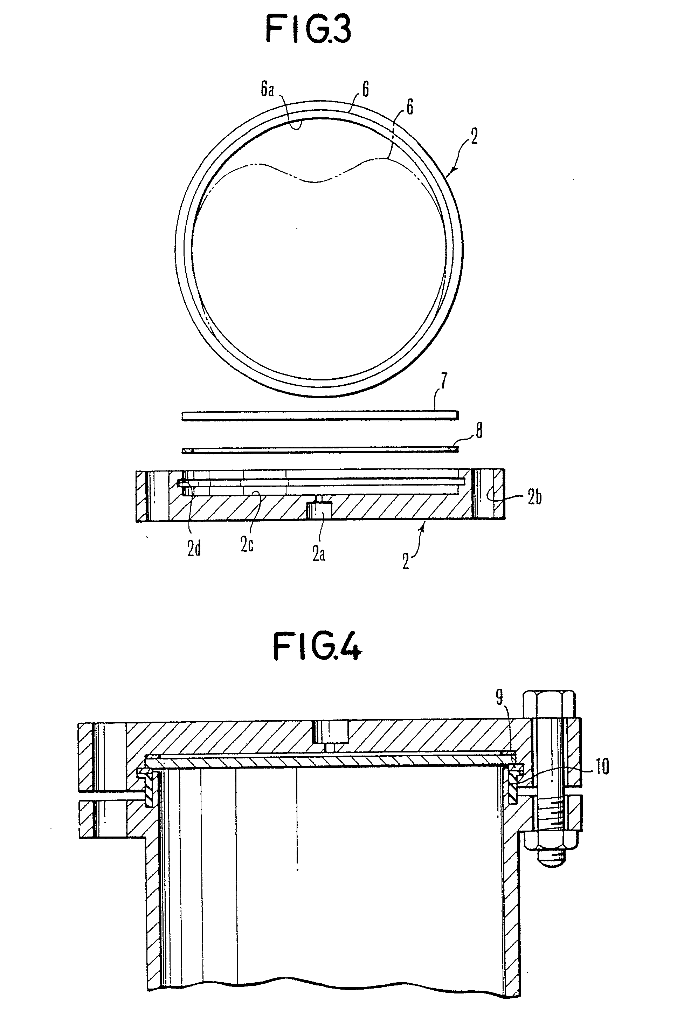

On the column body 1 of this embodiment at the root of both ends of the end flange 1a, a circumferential groove 6b is formed, where the end of a seal ring 6 which will be described later is to be lockably inserted. A guide face 1c is formed as the outer circumferential side face of the predetermined length in the direction of both sides of the end. 2 is a cover which is lockably fitted to the end of the column body and on the circumferential edge of which is formed a bolt hole 2b which is in opposite position to the bolt hole 1a of the end flange 1a. 2a is a fluid path for the process liquid to flow when the device is in use after assembly. 2c is an inner dent of the cover, and in the inner circumferential part of which a seal ring 6 which is shown in Fig. 3, stainless steel multi-hole plate 7 as a partition membrane, and a ring gasket 8 are installed prior to assembly of the device. 2d is a circumferential groove formed on the circumferential wall of the inner dent 2c which acts as the fixture of the seal ring 6 itself when the outer circumferential flange is mounted and as a stopper for a stainless multi-hole plate 7. 3 is a tightening bolt and nut used for tightly fixing the column body 1 and the cover 2 with the seal ring in between to assemble the device. The filtration device in the embodiment of this invention which is composed of the above-mentioned can be assembled in relation to the condition that the guide face 1c at the end of the column body 1 and the seal ring 6 which is elastically fitted in the radial direction of the guide face 1c are assembled slidably in a definite length when the assembly is performed, as described in Fig. 2(a) and Fig. 2(b) as follows: that is, the filler slurry which is filled up to the upper end of the column body 1 in a convex shape is prevented from flowing out when the assembly is finished, thereby high density and uniform filling of the filler within the column body 1 is attained.

Fig. 2(a) is a view showing the assembly procedure of the device in Fig. 1, of which procedure is similar to the known one. In other words, a reservoir 11 (the column body may be used) is connected to the upper end of the column body 1, to which bottom end is set the cover 2 with a gasket for preventing liquid leaks 12 between them. Slurry 13 containing predetermined quantity of the filler is poured from the upper end of the reservoir 11. After that, a cover 2' is put on the upper end of the reservoir 11 and supply fluids by applying pressure by a high pressure pump which is not shown. After applying pressure, remove the cover 2' on the upper end and pump out liquid 14 in the reservoir 11. After pumping out, remove the cover 2' from the reservoir 11. A filler 15 is heaped up in the column body 1, to which the cover 2 which is installed beforehand with functional parts such as the stainless multi-hole plate and is shown in Fig. 1 is set and tightened with fastening bolts and nuts 23 as shown in an enlarged view of Fig. 2. Then filling the filler 15 into the column body 1 is finished.

Fig. 3 is a view illustrating the preparatory assembly work of the cover 2 which is prepared in a condition that the seal ring 6 and the like is attached when the aforementioned assembly is accomplished. The ring gasket 8 is put on the bottom of an inside dent 2c of the cover 2, on which the stainless multi-hole plate 7 is put. Then, the seal ring 6 is fixed to match with the inner circumferential groove 2d. Preparatory assembly of the cover applicable to the device assembly which is shown in Fig. 2(a) and Fig. 2(b) is established. It has been confirmed that the filtration device which is prepared in such a way, has highly enough degree of filling when compared with the filling condition of the filler which is obtained in the filtration device the structure of which is shown in Fig. 6.

The following Table 1 shows the results of Theoretical Plate representing the column capability and maximum allowable flow velocity when the same materials of the fillers are filled and the predetermined processing liquids are filtered in the following equipment: the filtration device (an embodiment of this invention) which is used for filling the fillers in the same three columns (A, B, C), each of which length being made as 7 mm in the direction of the generating line of the guide face which is in an embodiment of this invention in Fig. 1 and the filltration equipment (comparative examples) which is shown in Fig. 6 in the same dimensions of the three columns (D, E, F) as the aforementioned embodiment of this invention except the guide face.

Inner diameter of the column used in 301.5 mm, effective length 600 mm, pressure resistance 5 kg/cm$^2$f, material SUS 316 (materials of the reservoir are the same as that of the column), the filler used is TSK-GEL TOYOPEAL HW-55F (Toyo Soda Manufacturing Co.,Ltd.). Filling requirements are as follows: pure water is used as filling solvent, slurry density 60 vol%, Pressure 1.5/cm$^2$G, Final velocity at filling pressure 18 - 20 ml/cm$^2 \cdot$ hr.

Filled 150 ml of cattle serum-albumin as comparative verification materials for both the embodiment and comparative examples, processing liquid: phosphate buffer pH 6.8 (potassium dihydrogenphosphate, sodium dihydrogenphosphate = 1 : 1), processing speed 10 ml/cm$^2 \cdot$hr. Increased gradually Theoretical Plate and flow velocity from obtained chromatogram to determine maximum allowable flow velocity. From the result of Table 1, if the filtration device as an embodiment of this invention is adopted, Theoretical Plate and maximum allowable flow velocity is extremely high when compared with those of the comparative examples. Therefore, it is clear that the high density and uniform filler is filled in the filtration device.

Fig. 4 is a view showing another embodiment of this invention, wherein a stopper member 9 for preventing the partition membrane from coming out of the cover and a seal ring 10 are constituted as a separate body. The rest is the same structure as in the aforementioned embodiment 1 of this invention.

Similar effect can be obtained from this embodiment as from the aforementioned embodiment 1.

According to the high density, uniform filler type filtration device, as mentioned above, high density and uniform filling of the filler is possible, thereby sophisticated device to perform the refining and collecting of the objective material in the liquid on an industrial scale is realized. Assembly and parts replacement are also made easy and the implementation on an industrial scale can be favorably performed.

Furthermore, according to the device of this invention, high density and uniform filling of the filler can be realized with the aforementioned structure which is easy to operate. Therefore, it is applicable to the device for refinement and collection of various valuable materials, and its utility is extremely high.

## Table 1

Embodiment:

|   | Theoretical Plate (TP/60 cm) | Maximum Allowable Flow Velocity (ml/cm$^2$·hr) |
|---|---|---|
| A | 1900 | 12 |
| B | 2200 | 13 |
| C | 2100 | 12 |

Comparative Example:

|   | Theoretical Plate (TP/60 cm) | Maximum Allowable Flow Velocity (ml/cm$^2$·hr) |
|---|---|---|
| D | 1500 | 9 |
| E | 1400 | 9 |
| F | 1400 | 10 |

**Claims**

1. High density filler type filtration device having a cylindrical column body (1) for containing the filler and a cover arrangement sealingly and detachably attached to the upper open end of the filled column body (1) by means of an outer circumferential end flange (1a) at the upper end of the column body (1) and a corresponding flange at the cover arrangement,

characterized in that

a) the cover arrangement comprising a cover (2) with a fluid path (2a), a gasket (8), a membrane (7) and a seal ring (6, 10) is preassembled;

b) the flange of the cover arrangement extends downwardly (dent 2c) from the circumference of the cover (2) and comprises an inner circumferential groove (2d) for insertion of the seal ring (6, 10);

c) the gasket (8) and the membrane (7) are arranged in this order between the inner surface of the cover (2) and the seal ring (6, 10); and

d) a guide face (6a) extends coaxially from the end flange (1a) of the column body (1) for sealingly contacting the coaxial seal ring (6, 10) from the inside.

2. device according to claim 1, wherein the partition membrane (7) to prevent the filler from flowing out is a multi-hole stainless sintered plate.

3. Device according to claim 1 or claim 2, wherein the seal ring (6, 10) also serves as a stopper for the partition membrane (7).

**Revendications**

1. Dispositif de filtration du type à remplissage à haute densité ayant un corps de colonne cylindrique (1) pour contenir le produit d'apport et un système de couvercle fixé hermétiquement et de façon amovible à l'extrémité supérieure ouverte du corps de colonne (1) rempli, au moyen d'un rebord circonférentiel externe (1a) à l'extrémité supérieure du corps de colonne (1) et d'un rebord correspondant sur le système de couvercle, caractérisé en ce que

a) le système de couvercle comprenant un couvercle (2) avec un passage pour fluide (2a), un joint (8), une membrane (7) et une bague d'étanchéité (6, 10) est pré-assemblé ;

b) le rebord du système de couvercle s'étend vers le bas (cavité 2c) à partir de la circonférence du couvercle (2) et comprend une rainure circonférentielle interne (2d) pour l'insertion de la bague d'étanchéité (6, 10) ;

c) le joint (8) et la membrane (7) sont disposés dans cet ordre entre la face interne du couvercle (2) et la bague d'étanchéité (6, 10) ; et

d) une face de guidage (6a) s'étend coaxialement à partir du rebord d'extrémité (1a) du corps de colonne (1) pour entrer en contact de manière hermétique avec la bague d'étanchéité (6, 10) coaxiale depuis l'intérieur.

2. Dispositif conformément à la revendication 1, dans lequel la membrane de séparation (7) pour empêcher le produit d'apport de s'échapper, est une plaque inoxydable frittée à trous multiples.

3. Dispositif conformément à la revendication 1 ou à la revendication 2, dans lequel la bague d'étanchéité (6, 10) sert aussi de butée pour la membrane de séparation (7).

**Ansprüche**

1. Filtervorrichtung hoher Fülldichte mit einer zylindrischen Säule (1) zur Aufnahme des Füllmaterials und mit einer Abdeckeinrichtung, die am oberen Ende der gefüllten Säule (1) mit Hilfe eines äußeren Umfangsendflansches (1a) am oberen Ende der Säule (1) und eines entsprechenden Flansches an der Abdeckeinrichtung abdichtend und abnehmbar befestigt ist,
**dadurch gekennzeichnet, daß**

a) die Abdeckeinrichtung, die eine Abdeckung (2) mit einem Fluiddurchlaß (2a), eine Dichtung (8), eine Membran (7) und einen Dichtungsring (6, 10) aufweist, vorher zusammengebaut ist;

b) der Flansch der Abdeckanordnung sich nach unten (Zahn 2c) vom Umfang der Abdeckung (2) erstreckt und eine innere, umlaufende Nut (2d) zum Einlegen des Dichtungsrings (6, 10) aufweist;

c) die Dichtung (8) und die Membran (7) in dieser Reihenfolge zwischen der Innenfläche der Abdeckung (2) und dem Dichtungsring (6, 10) angeordnet sind; und daß

d) eine Führungsfläche (6a) sich koaxial von dem Endflansch (1a) der Säule (1) erstreckt, um den koaxialen Dichtungsring (6, 10) von innen abdichtend zu berühren.

2. Vorrichtung nach Anspruch 1, wobei die Trennmembran (7) zum Verhindern des Ausfließens des Füllmaterials eine rostfreie, gesinterte Lochplatte ist.

3. Vorrichtung nach Anspruch 1 oder 2, wobei der Dichtungsring (6, 10) ferner als Anschlag für die Trennmembran (7) dient.

# FIG.1

Stocking the
filter, slurry

Running the
liquid, applying
pressure

Removal of
the reservoir

# FIG.2(a)

Setting the
cover

EP 0 255 049 B1

# FIG.2(b)

Before
setting

After
setting

# FIG.3

# FIG.4

# FIG.5(a)

# FIG.5(b)

# FIG.6